Europäisches Patentamt

(19) European Patent Office

Office européen des brevets

(11) Publication number: **0 019 666**
**B1**

(12) **EUROPEAN PATENT SPECIFICATION**

(45) Date of publication of patent specification: **30.11.83**

(51) Int. Cl.³: **G 02 B 7/16, G 03 B 27/32**

(21) Application number: **79200261.0**

(22) Date of filing: **28.05.79**

(54) Lens turret.

(43) Date of publication of application:
**10.12.80 Bulletin 80/25**

(45) Publication of the grant of the patent:
**30.11.83 Bulletin 83/48**

(84) Designated Contracting States:
**DE FR GB IT NL SE**

(56) References cited:
**CH - A - 237 011**
**CH - A - 310 667**
**DE - B - 1 121 922**
**DE - B - 1 200 119**
**DE - C - 705 249**
**DE - C - 902 578**
**DE - C - 1 077 056**

(73) Proprietor: **Océ-Helioprint A.S.**
**16 Munkegaardsvej**
**DK-3490 Kvistgaard (DK)**

(72) Inventor: **Hagedorn-Olsen, Jens**
**Hornbaek Stationsvej 8**
**DK-3100 Hornbaek (DK)**

(74) Representative: **Bleukx, Lucas Lodewijk Maria, Ir. et al,**
**Océ-Nederland B.V. Patents & Information Dept.**
**Postbus 101**
**NL-5900 MA Venlo (NL)**

Courier Press, Leamington Spa, England.

# Lens turret

The present invention relates to an optical device comprising a lens turret rotatably mounted on a holder and rotatable around an axis, a plurality of lenses mounted on said turret and around said axis, an adjusting gear on at least one of said lenses and drive means for rotating said lens turret around said axis with respect to said holder and for rotating said adjusting gear (or gears) with respect to said lens turret, said drive means comprising a shaft rotatable in either direction and coinciding with said rotation axis and carrying a drive gear engaging said adjusting gear or gears, said device further comprising means providing increased resistance against rotation of said lens turret when one of said lenses is in its operating position.

Such a device is known from French patent specification 531 524. Therein a turrent mounted on a rotatable hollow shaft is described. A second shaft is mounted coaxially within said hollow shaft, which second shaft at the side of the lens turret puts out of the hollow shaft and is provided with a plurality of drive gears. Each lens is provided with an adjusting gear to adjust the diaphragms of the lenses. For every adjusting gear there is provided a drive gear engaging said adjusting gear.

The known device is disadvantageous in that use is made of a construction comprising two coaxially mounted shafts enhancing the chances for a jam. Especially where nowadays accurate control mechanisms are available it is considered a disadvantage that two shafts have to be controlled independently of each other. That requires an extensive control mechanism as well as a double drive mechanism.

Object of the invention is to provide an optical device as described above comprising a single shaft and requiring a single drive mechanism.

According to the invention an optical device as described above is characterized in that at least one of the adjusting gears has a limited range of rotation with respect to said lens turret in at least one direction of rotation, said resistance providing means permitting rotation of said turret, when said one adjusting gear is at a limit of said limited range so that then said turret is turnable by said drive gear via said one adjusting gear in said one direction.

By driving the shaft to rotate the drive gear the adjusting gear is rotated until the moment when its rotation reaches the limit of the limited range. On further driving of the shaft in the same rotation direction the lens turret will be rotated via the adjusting gear. The driving can be continued until the desired lens has arrived at a desired operating position. Then by reversing the rotation direction of the shaft the adjusting gear of the desired lens can be reset to a desired position.

In particular an optical device according to the invention can be used in reproduction cameras in which a plurality of lenses is mounted on a rotatable lens turret in order to obtain a plurality of magnification ratios.

Preferably the lenses are mounted such that the adjusting gears are all in one plane and that only one drive gear is provided which drive gear at any moment engages every adjusting gear.

Further objects and advantages will become clear from the following description of an optical device in accordance with the present invention, reference being made to the annexed drawings in which:

Fig. 1 is a perspective view of a reproduction camera.

Fig. 2 is a plan view of a lens turret.

Fig. 3 is a sectional view along the line III—III in Fig. 2.

Fig. 4 is a schematic wiring diagram of electrical connections to a motor to be used with the lens turret of Fig. 2.

Fig. 5 is a detailed view of part of a control panel of the reproduction camera of Fig. 1.

Fig. 6A is a first part of a wiring diagram of a control circuit to be used with an optical device according to the present invention.

Fig. 6B is a second part of the wiring diagram of the control circuit.

Fig. 7 is a wiring diagram of switches forming part of the control circuit.

Fig. 8 shows the way in which Fig. 6A and Fig. 6B fit to each other.

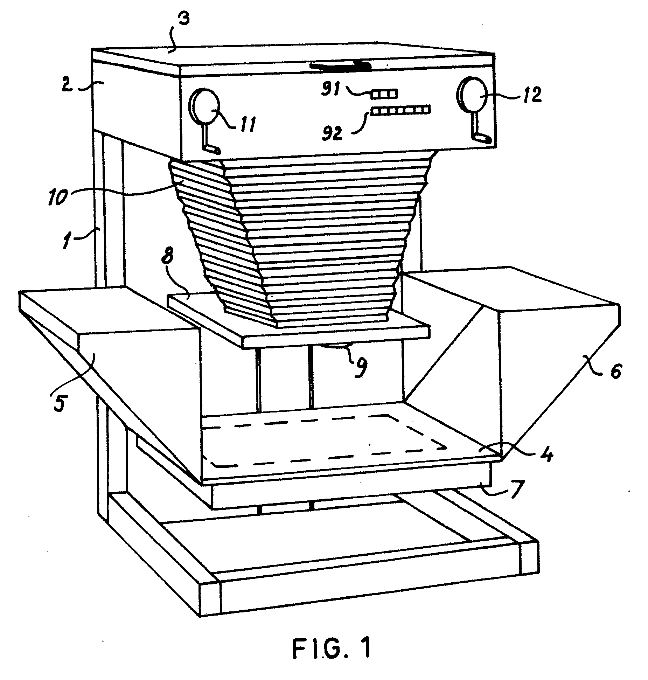

For a general description of a reproduction camera reference is made to Fig. 1. The reproduction camera according to Fig. 1 comprises a frame 1, to which an upper body 2 is firmly fixed. In the upper body a glass plate, functioning as image plane for receiving a light-sensitive material is installed, which plate is covered off with a hinging plate 3. Further the camera comprises a table 4 for receiving the original to be reproduced, lamp housings 5, 6 and 7 for exposing the original, and a holder 8 with a rotatable lens turret 9 upon which a plurality of lenses is mounted around the rotation axis of the turret 9, with each of which lenses an image of the original can be projected on the light-sensitive material. During the projection a bellows 10 obstructs undesired light. Further upper body 2 is provided with cranks 11 and 12 respectively. Crank 11 cooperates in such a way with the lens holder 8, that upon a rotation of the crank 11 the holder 8 is displaced in vertical direction and consequently the reproduction factor of the camera being defined by the distance between the glass plate and the lens can be adjusted. Via a transmission mechanism the crank 12 cooperates with table 4, so that by rotation of crank 12 table 4 can be moved up and down, in which way the image which is projected on the light-sensitive material, can be focussed.

A first series of push-buttons 91 is provided on upper body 2 for selecting one of a plurality of lenses mounted on lens turret 9. A second series of push-buttons 92 is provided on upper body 2 for selecting one of a plurality of diaphragm openings of the lens selected with one of the push-buttons of the first series 91.

The above description is considered to be sufficient for a basic understanding of a reproduction camera in which an optical device according to the present invention can be used.

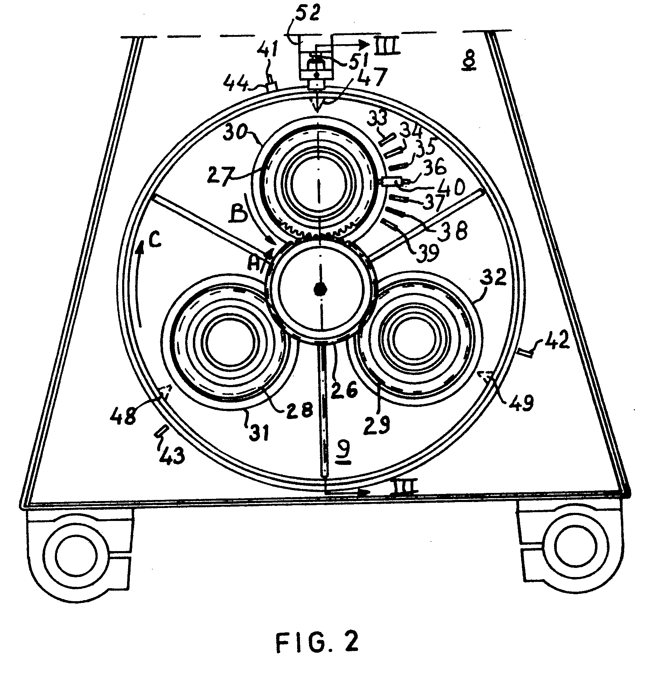

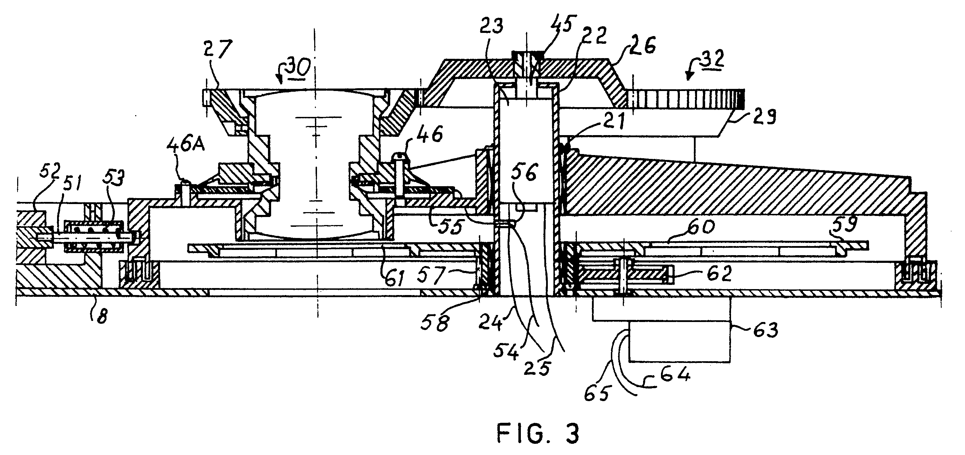

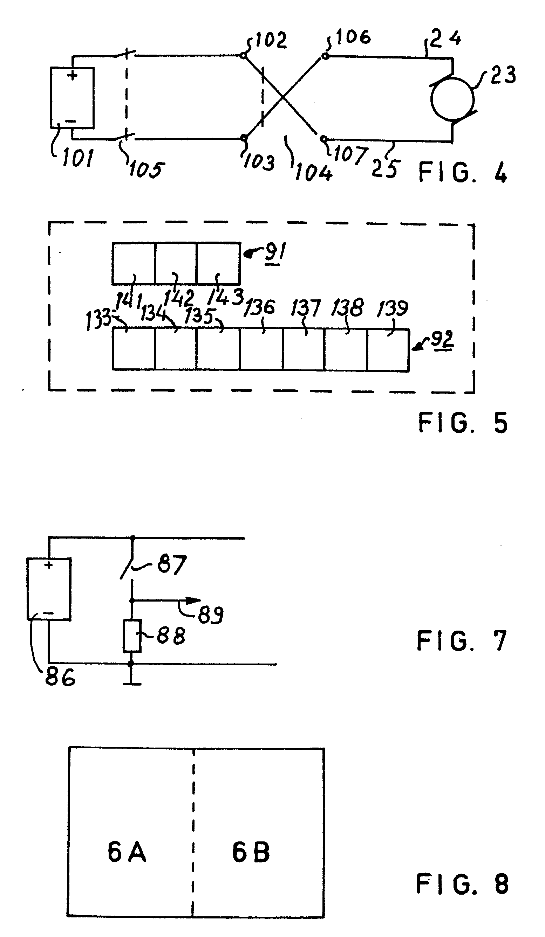

Referring to Figures 2 and 3 there is shown a holder 8 in which a lens turret 9 is mounted, being rotatable around a rotation axis by means of bearings 21 and hollow shaft piece 22. A d.c. electromotor 23 with connecting leads 24 and 25 is mounted centrally in shaft piece 22. Mounted upon motor 23 via a shaft 45 is a drive gear 26 to be rotated when motor 23 is energized by a d.c. source of electrical energy 101 (Fig. 4) through connecting leads 24 and 25. Drive gear 26 engages diaphragm adjusting gears 27, 28 and 29 of lenses 30, 31 and 32, respectively, of different focal lengths. The lenses 30, 31 and 32 are fixedly mounted on the turret 9, as shown for example by means of bolts 46 and 46A. The lenses 30, 31 and 32 are placed on the turret 9 such that their optical axes are parallel to each other and to the rotation axis of the lens turret 9. Furthermore, the distances between the optical axes and the rotation axis are all equal.

As is well known the direction of rotation of drive gear 26 can be chosen by suitably connecting leads 24 and 25 to the positive and the negative terminals of the d.c. source through a commutator 104 (Fig. 4). The adjusting gears 27, 28 and 29 are connected to the diaphragm mechanisms of the lenses 30, 31 and 32, respectively, such that equal angles of rotation of those adjusting gears correspond to equal diaphragm changes. In the particular embodiment described the lenses 30, 31 and 32 have focal lengths of 150, 245 and 305 mm, respectively, and each of them has a diaphragm setting range from f/9 to f/64. Furthermore, the diaphragm settings of all three lenses coincide, i.e. when the diaphragm setting of lens 30 is e.g. f/16, then the diaphragm settings of the lenses 31 and 32 are f/16 too. A rotation of an adjusting gear through an angle of about 75° covers the complete range of possible diaphragm settings. Further rotation beyond the ultimate diaphragm settings is inhibited by the diaphragm mechanisms inside the lenses, which mechanisms are of well known constructions. Also mounted on lens turret 9 are seven reed switches 33, 34, 35, 36, 37, 38 and 39. The reed switches 33—39 are positioned on a circle around the optical axis of lens 30. Mounted on adjusting gear 27 is a permanent magnet 40, which in either ultimate position of the adjusting gear 27 is in operative relationship with reed switches 33 and 39, respectively, whereas in intermediate positions of the adjusting gear 27 the magnet 40 is in operative relationship with one of the other reed switches 34—38, that particular reed switch, which is activated by the magnet 40, then being indicative of the diaphragm setting of lens 30. The active reed switch is also indicative of the diaphragm settings of the lenses 31 and 32 due to the abovementioned interconnection of their adjusting gears 28 and 29 with adjusting gear 27 via drive gear 26.

Three reed switches 41, 42 and 43 are mounted on holder 8 along the periphery of the lens turret 9. A magnet 44 is mounted on the lens turret 9 along the periphery thereof such that when magnet 44 is in facing relationship with reed switch 41 then lens 30 is in its operating position. The same holds for magnet 44 and reed switch 42 and lens 31 as well as magnet 44 and reed switch 43 and lens 32, respectively. The lens turret 9 is provided along its periphery with three holes 47, 48 and 49 corresponding to the lenses 30, 31 and 32, respectively. A spring-loaded shaft 51 of an electromagnet 52 fits into a hole 47, 48 or 49. When the shaft 51 is in inserted position in such a hole 47, 48 or 49 the lens turret 9 is locked against rotation with respect to the holder 8 and the corresponding lens is in its exact operating position.

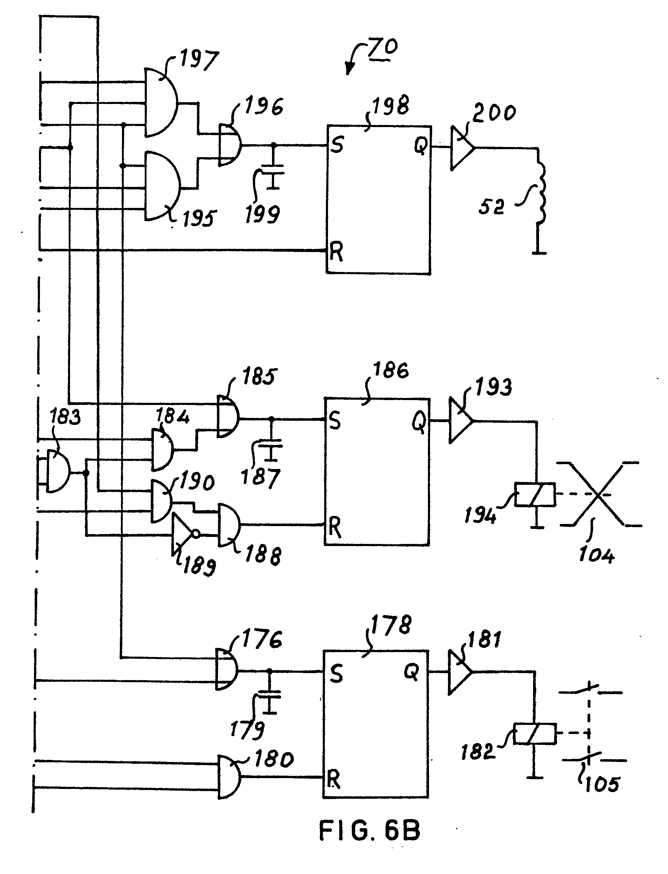

Reed switches 33—39 are connected to a control circuit 70 to be described in relation to Figures 6A and 6B through a multi-wire cable 54. The cable 54 is fed to the rearside 55 of the turret 9 through a slit 56 in hollow shaft piece 22. In order not to twist the cable 54 around the shaft piece 22 commutator 104 is operated by control circuit 70 such that when either reed switch 41 or reed switch 43 is activated by magnet 44 commutator 104 connects the leads 24 and 25 to the positive and negative poles of the source of electrical energy such that in Fig. 2 drive gear 26 is rotated clockwise or counterclockwise respectively. In case reed switch 42 is activated by magnet 44 then the position of commutator 104 is determined by whether lens 31 should be replaced by lens 30 or by lens 32, the former leading in Fig. 2 to a counterclockwise rotation of drive gear 26, the latter leading in Fig. 2 to a clockwise rotation of drive gear 26. In this way the rotation of lens turret 9 is restricted to an angle of 240°. A gear wheel 57 is mounted on shaft piece 22 by means of a bearing 58. Gear wheel 57 is provided with a filter wheel 59 comprising a set of filters around the axis of gear wheel 57, two of said filters being shown as 60 and 61. The filters e.g. can be in the primary colours red, green and blue to obtain colour separation images of an original. Gear wheel 57 is in engagement with a gear wheel 62 which can be rotated by an electromotor 63. Electromotor 63 is connectable to a source of electrical energy (not shown) by means of leads 64 and 65.

Figure 4 shows the electrical connections to motor 23. The d.c. source of electrical energy 101 is connected to a first pair of terminals 102, 103 of the commutator 104 through a switch 105. Motor 23 by means of leads 24 and 25 is connected across a second pair of terminals 106, 107 of commutator 104. Switch 105 and commutator 104 are relay-operated by electrical signals generated by control circuit 70.

Figure 5 shows a view in more detail of the first and second series of push-buttons 91 and 92 respectively.

The first series of push-buttons 91 comprises three push-buttons 141, 142 and 143. Pushing one of the buttons 141, 142 or 143 releases both other buttons, whereby at any moment only one button is pushed.

The second series of push-buttons 92 comprises seven push-buttons 133, 134, 135, 136, 137, 138 and 139. Here too pushing of one of the buttons releases all other buttons whereby at any moment only one button is pushed. Every push-button and every reed switch mentioned hereinabove comprises a switch 87 (Fig. 7), one terminal of which is connected to a positive terminal of a d.c. voltage source 86 supplying energy to control circuit 70. The other terminal of switch 87 is connected to a junction of one terminal of a 1 kΩ resistor 88 and an output line 89. The other terminal of resistor 88 is connected to the negative terminal of voltage source 86. Each output line 89 serves as an input terminal of control circuit 70 either carrying a 1 or a 0 signal when switch 87 is closed or opened, respectively.

An example of the way in which the device described hereinabove operates is given below.

Assume as shown in Fig. 2 lens 30 to be in its operating position and magnet 40 being in operative relationship with reed switch 36 corresponding to a diaphragm setting of f/22. Suppose both the lens and the diaphragm setting have to be changed, e.g. to lens 31 at a diaphragm setting of f/45 the former as represented by activated reed switch 42 and the latter as represented by activated reed switch 38. Upon activation of the control circuit 70 in a way to be described furtheron motor 23 is activated through commutator 104 and switch 105 to rotate drive gear 26 in the direction of the arrow A. Due to the rotation of drive gear 26 all three diaphragm adjusting gears 27, 28 and 29 are rotated in the direction of arrow B until the diaphragm mechanisms inhibit further rotation of the adjusting gears with respect to the lens turret 9. Magnet 40 is now opposite reed switch 33. Motor 23 keeps on being energized as provided for by the control circuit 70 and electromagnet 52 is activated to unlock the lens turret 9 by retracting shaft 51 against the spring action of a spring 53. The lens turret 9 then is rotated in the direction of arrow C through the drive gear, adjusting gears and diaphragm mechanisms, the latter acting as stops, of the lenses 30, 31 and 32.

Control circuit 70 has been set to react only to the activation of reed switch 42 by magnet 44. Activation of reed switch 42 by magnet 44 de-energizes electromagnet 52 through control circuit 70, thus leaving shaft 51 to the action of the spring 53 to be inserted into the hole 48 and to lock the lens turret 9. Operation of reed switch 42 also activates the control circuit 70 to reverse the direction of rotation of the motor 23 and thus of drive gear 26. The adjusting gear 27 together with the magnet 40 are then rotated out of their ultimate positions counter to arrow B. The control circuit 70 has been set to respond to operation of reed switch 38 by stopping the supply of electrical power to the motor 23 thus holding all three adjusting gears 27, 28 and 29 in a position corresponding to a diaphragm setting of f/45.

Control circuit 70 and its operation will now be described in detail.

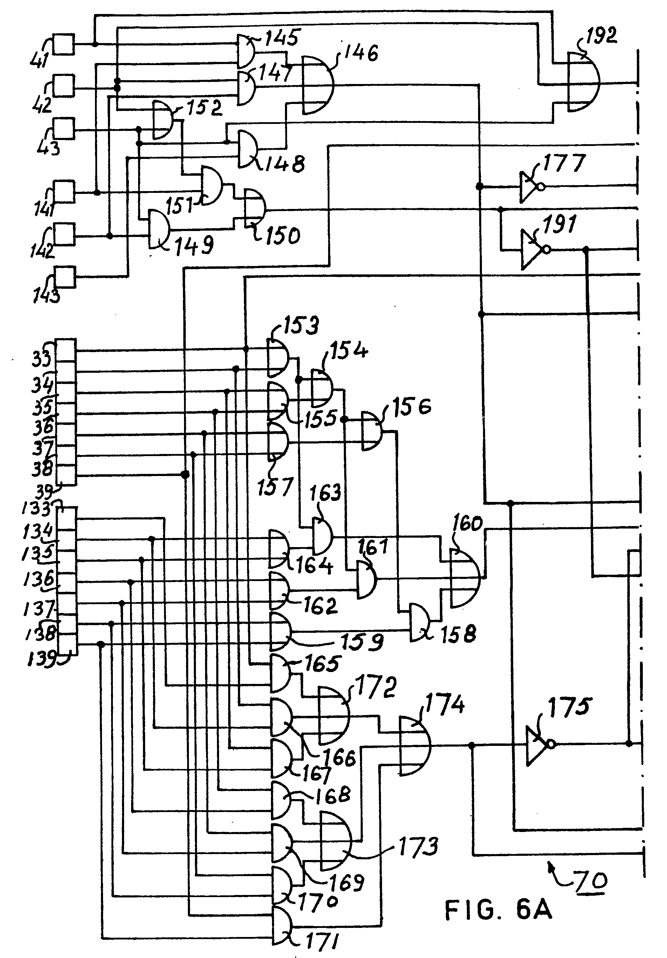

Control circuit 70 is shown in Figures 6A and 6B.

Input signals 1 or 0 to control circuit 70 are derived from the respective output lines 89 of reed switches 33, 34, 35, 36, 37, 38, 39, 41, 42 and 43 and of push-buttons 133, 134, 135, 136, 137, 138, 139, 141, 142 and 143. Reed switch 41 is connected to a first input of a two-input AND-gate 145, the other input of which is connected to push-button 141. The output of AND-gate 145 is connected to a first input of a three-input OR-gate 146. A second input of OR-gate 146 is connected to the output of a two-input AND-gate 147, the inputs of which are connected to reed switch 42 and push-button 142, respectively. The third input of OR-gate 146 is connected to the output of a two-input AND-gate 148, the inputs of which are connected to reed switch 43 and push-button 143, respectively. Reed switch 43 is also connected to a first input of a two-input AND-gate 149, the second input of which is connected to push-button 142. The output of AND-gate 149 is connected to a first input of a two-input OR-gate 150. The second input of OR-gate 150 is connected to the output of a two-input AND-gate 151. A first input of AND-gate 151 is connected to push button 141. The second input of AND-gate 151 is connected to the output of a two-input OR-gate 152 of which the two inputs are connected to reed switches 42 and 43, respectively. Reed switch 33 is connected to a first input of a two-input OR-gate 153, the second input of which is connected to reed switch 34. The output of OR-gate 153 is connected to a first input of a two-input OR-gate 154, the second input of which is connected to the output of a two-input OR-gate 155, the two inputs of which are connected to reed switches 35 and 36, respectively. The output of OR-gate 154 is connected to a first input of a two-input OR-gate 156, the second input of which is connected to the output of a two-input OR-gate 157, the two inputs of which are connected to reed switches 37 and 38, respectively. The output of OR-gate 156 is connected to a first input of a two input AND-gate 158, the second input of which is connected to the output of a two-input OR-gate 159, the two inputs of which are connected to push-buttons 138 and 139, respectively. The output of AND-gate 158 is connected to a first input of a three-input OR-gate 160. A second input of OR-gate 160 is connected to the output of a two-input AND-gate 161. A first input of AND-gate 161 is connected to the output of OR-gate 154, the second input of AND-gate 161 is connected to the output of a two-input OR-gate 162, the two inputs of which are connected to push-buttons 136 and 137, respectively. The third input of OR-gate 160 is connected to the output of a two-input AND-gate 163. A first input of AND-gate 163 is connected to the output of OR-gate 153. The second input of AND-gate 163 is connected to the output of a two-input OR-gate 164, the two inputs of which are connected to reed switches 134 and 135, respectively. Reed switches 33, 34, 35, 36, 37, 38 and 39 are connected to first inputs of two-input AND-gates 165, 166, 167, 168, 169, 170 and 171, respectively. The second inputs of AND-gates 165, 166, 167, 168, 169, 170 and 171 are connected to push-buttons 133, 134, 135, 136, 137, 138 and 139, respectively. The outputs of AND-gates 165; 166 and 167 are connected to the inputs of a three-input OR-gate 172, respectively. The outputs of AND-gates 168, 169 and 170 are connected to the inputs of a three-input OR-gate 173, respectively. The outputs of AND-gate 171 and of OR-gates 172 and 173 are connected to the inputs of a three-input OR-gate 174, respectively. The output of OR-gate 174 is connected to the input of an inverter 175. The output of inverter 175 is connected to a first input of a two-input OR-gate 176. The second input of OR-gate 176 is connected to the output of an inverter 177, the input of which is connected to the output of OR-gate 146. The output of OR-gate 176 is connected to the set-input S of a latch 178, which in this embodiment is incorporated in an integrated circuit element of the type 4043 manufactured by RCA Corporation. Connected to the output of OR-gate 176 is one terminal of a capacitor 179, the other terminal of which is connected to the negative terminal of voltage source 86. The reset-input R of latch 178 is connected to the output of a two-input AND-gate 180. A first input of AND-gate 180 is connected to the output of OR-gate 174. The second input of AND-gate 180 is connected to the output of OR-gate 146. The output Q of latch 178 is connected to the input of a buffer amplifier 181. The output of buffer amplifier 181 is connected to one terminal of a relay 182, the other terminal of which is connected to the negative terminal of voltage source 86. Relay 182 operates switch 105. The output of OR-gate 160 is connected to a first input of a two-input AND-gate 183, the second input of which is connected to the output of inverter 175. The output of AND-gate 183 is connected to a first input of a two-input AND-gate 184, the second input of which is connected to the output of OR-gate 146. The output of AND-gate 184 is connected to a first input of a two-input OR-gate 185, the second input of which is connected to the output of OR-gate 150. The output of OR-gate 185 is connected to the set-input S of latch 186 and to a first terminal of a capacitor 187, the other terminal of which is connected to the negative terminal of voltage source 86. The reset-input R of latch 186 is connected to the output of a two-input AND-gate 188, a first input of which is connected to the output of an inverter 189. The input of inverter 189 is connected to the output of AND-gate 183. The second input of AND-gate 188 is connected to the output of a two-input AND-gate 190. A first input of AND-gate 190 is connected via an inverter 191 to the output of OR-gate 150. The second input of AND-gate 190 is connected to the output of a three-input OR-gate 192, the three inputs of which are connected to reed switches 41, 42 and 43, respectively. The output Q of latch 186 is connected to the input of a buffer amplifier 193, the output of which is connected to a first terminal of a relay 194. The other terminal of relay 194 is connected to the negative terminal of voltage source 86. Relay 194 operates commutator 104. The output of inverter 191 is also connected to a first input of a three-input AND-gate 195. A second input of AND-gate 195 is connected to reed switch 33. The third input of AND-gate 195 is connected to the output of inverter 177. The output of AND-gate 195 is connected to a first input of a two-input OR-gate 196. The second input of OR-gate 196 is connected to the output of a three-input AND-gate 197. A first input of AND-gate 197 is connected to the output of inverter 177, a second input of AND-gate 197 is connected to the output of OR-gate 150 and the third input of AND-gate 197 is connected to reed switch 39. The output of OR-gate 196 is connected to the set-input S of a latch 198 and to a first terminal of a capacitor 199. The other terminal of capacitor 199 is connected to the negative terminal of voltage source 86. The reset input R of latch 198 is connected to the output of OR-gate 146. The output Q of latch 198 is connected to the input of a buffer amplifier 200. The output of amplifier 200 is connected to one terminal of electromagnet 52, the other terminal of which is connected to the negative terminal of voltage source 86.

The control circuit 70 as described herein-above generates three output signals HM, ML and MB, respectively, which independently of each other are either 1 or 0. The output signal HM is the output signal of latch 198 at the Q output thereof. If HM is 1 electromagnet 52 is energized and shaft 51 is withdrawn to release lens turret 9. The output signal ML is the output signal of latch 186 at the Q output thereof. Commutator 104 is connected in such a way between voltage source 101 and motor 23 that when motor 23 is energized drive gear 26 in Fig. 2 will be rotated counterclockwise when ML is 1 and clockwise when ML is 0.

The output signal MB is the output signal of latch 178 at the Q output thereof. If MB is 1 switch 105 is closed to energize motor 23 to rotate drive gear 26 in a direction defined by the output signal ML of latch 186. If MB is 0 switch 105 is opened to stop energization of motor 23 and rotation of drive gear 26.

The latches 178, 186 and 198 are integrated circuit elements of the type 4043 manufactured by RCA Corporation. The Q output of such a latch is set to 1 by and remains 1 during and after a 1 puls at the S-input of the latch. The Q output is reset to 0 by a 1 puls at the R-input of the latch unless a 1 is present at the S-input of the latch during the duration of the 1 puls at the R-input. In other words the S-input is dominant over the R-input, what makes the R-input ineffective as long as a 1 is present at the S-input. To prevent simultaneous 1 to 0 transitions at the S- and the R-inputs, capacitors 179, 187 and 199 are provided to lengthen the durations of 1 signals at the S-inputs of the latches 178, 186 and 198, respectively.

Functioning of the control circuit 70 will now be described by way of two examples, a first example in which only a change of diaphragm takes place and a second example in which a change of lens takes place.

In the first example assume that lens 31 is in its operating position as indicated by pressed push-button 142 and activated reed switch 42. That is the lines coming from reed switch 42 and push-button 142 in Fig. 6A both carry a 1 signal and the lines coming from reed switches 41 and 43 and push-buttons 141 and 143 all carry a 0 signal. Further assume that a diaphragm change should be achieved from f/16 to f/45, the former as indicated by activated reed switch 35 and pressed push-button 135, the latter as indicated by activated reed switch 38 and pressed push-button 138. In the initial state pressed push-button 135 and activated reed switch 35 mean that 1 signals are present in Fig. 6A at the lines coming from push-button 135 and reed switch 35, respectively. In the final state pressed push-button 138 and activated reed switch 38 mean that 1 signals are present in Fig. 6A at the lines coming from push-button 138 and reed switch 38, respectively. In intermediate states push-button 138 is pressed and reed switches 35, 36 and 37 are activated successively, meaning that in those intermediate states 1 signals are present in Fig. 6A at the lines coming from reed switches 35, 36 and 37 successively. It will be shown that in the initial state upon pressing push-button 138 drive gear 26 in Fig. 2 will start rotating counterclockwise until magnet 40 activates reed switch 38.

At least one of the input signals to each of the AND-gates 145, 148, 149 and 151 being 0, the output signals of those AND-gates are 0. Both input signals to OR-gate 150 being 0, an output signal MLL of OR-gate 150 is 0. Both input signals to AND-gate 147 are 1 thus the output signal of AND-gate 147 and consequently an output signal $\overline{MBL}$ of OR-gate 146 are 1 and an output signal MBL of inverter 177 is 0. Since the signal MBL is an input signal to both AND-gates 195 and 197 both output signals of those AND-gates are 0 and the signal at the set-input S of latch 198 is 0. Since the signal $\overline{MBL}$ is 1 and applied to the reset input R of latch 198 the output signal HM is 0 and electromagnet 52 is not energized. Since the signal HM cannot be influenced by any of the signals of one of the reed switches 33—39 and the push-buttons 133—139 due to the signal MBL being 0 electromagnet 52 keeps on being not energized during any diaphragm change. That means that lens turret 9 is locked by shaft 51 during any diaphragm change. In the initial state the signal of reed switch 35 is 1 giving a 1 signal at the outputs of OR-gates 154, 155 and 156 and a 0 signal at the output of OR-gate 153. In the initial state the signal of push-button 135 is 1 giving a 1 signal at the output of OR-gate 164 and a 0 signal at the outputs of OR-gates 162 and 159. As is clear now at least one of the inputs of each of the AND-gates 158, 161 and 163 carries a 0 signal making the output signals of the AND-gates 158, 161 and 163 as well as all three input signals and an output signal MLD of OR-gate 160 0. Thus one input signal MLD of AND-gate 183 is 0, which gives a 0 signal at the output of AND-gate 183 and at a first input of AND-gate 184. The second input of AND-gate 184 is supplied with the output signal $\overline{MBL}$ of OR-gate 146, which is 1, giving a 0 signal at a first input of OR-gate 185. Supplied to the second input of OR-gate 185 is the output signal MLL of OR-gate 150, which is 0. Thus the output signal of OR-gate 185, which is the input signal of set-input S of latch 186 is 0. The reset-input R of latch 186 is supplied with a 1 signal from the output of AND-gate 188. A first input of AND-gate 188 is supplied with the inverted output signal of AND-gate 183. The second input of AND-gate 188 is supplied with the 1 output signal of AND-gate 190. A first input of AND-gate 190 is supplied with the signal $\overline{MLL}$ which is a 1 signal and the second input of AND-gate 190 is supplied with the output signal of OR-gate 192, which is a 1 signal because one of the input signals of OR-gate 192 is a 1 signal. Thus the output signal of latch 186 is 0. That means that unless the signal at the set-input S of latch 186 is changed to a 1 signal drive gear 26 in Fig. 2 will start rotating clockwise upon energization of motor 23. It will be shown further below that upon pressing push-button 138 the signal at the set-input S of latch 186 indeed changes from 0 to 1. The 1 signals of reed switch 35 and push-button 135 are combined in the AND-gate 167 to give a 1 signal at the output thereof. Via the OR-gates 172 and 174 the output signal $\overline{MBD}$ of the OR-gate 174 is 1. The outputs of AND-gates 165, 166, 168, 169, 170 and 171 are all 0 since all of the input signals of those AND-gates are 0. The signal $\overline{MBD}$ is inverted by inverter 175 to give a 0 signal MBD at a first input of OR-gate 176. The second input of OR-gate 176 is supplied with the signal MBL, which is the inverted signal $\overline{MBL}$ at the output of OR-gate 146. Signal $\overline{MBL}$ is 1 and thus signal MBL is 0. Both input signals of OR-gate 176 being 0 a 0 signal is present at the set-input S of latch 178. Since both signals MBL and MBD are 0 the signals $\overline{MBL}$ and $\overline{MBD}$ which are supplied each to one input of AND-gate 180 are 1, giving a 1 signal at the output thereof and at the reset-input R of latch 178. The Q output of latch 178 as defined by a 0 signal at the set-input S and a 1 signal at the reset-input R thus is a 0 signal which means that switch 105 is opened and motor 23 is not energized. It will be clear from the description given above that the same output signals HM, ML and MB are derived from the following combinations: activated reed switch 41 or 43 and pressed push-button 141 or 143, respectively, as well as activated reed switch 33, 34, 36, 37, 38 or 39 and pressed push-button 133, 134, 136, 137, 138 or 139, respectively.

Upon pressing push-button 138 the output signals of push-button 135 and OR-gate 164 change from 1 to 0. However, since the output signal of OR-gate 153 was already 0 no change occurs in the output signal of AND-gate 163, which signal remains 0. The output signals of push-button 138 and OR-gate 159 change from 0 to 1. When pressing push-button 138 drive gear 26 has not rotated yet and reed switch 35 keeps on being activated until gear wheel 27 has been rotated by drive gear 26 to move magnet 40 away from reed switch 35.

As has been shown before the output signals of OR-gates 154 and 156 are 1 as long as the output signal of reed switch 35 is 1. It is not difficult to see that the output signal of OR-gate 156 also is 1 when one of the reed switches 36, 37 or 38 is activated, either because of the output signal of OR-gate 154 being 1 or because of the output signal of OR-gate 155 being 1. The output signal of AND-gate 158 which initially was 0 upon pressing of push-button 138 changes to 1 because both input signals to AND-gate 158 have become 1. The output signal MLD of OR-gate 160 which initially was 0 changes to 1 due to the change to 1 of the output signal of AND-gate 158. Upon pressing push-button 138 the output signal of AND-gate 166 changes from 1 to 0. Since the output signals of the AND-gates 165, 166, 168, 169, 170 and 171 already were 0

the output signal $\overline{MBD}$ of OR-gate 174 is changed from 1 to 0 and the output signal MBD of inverter 175 is changed from 0 to 1. Signal $\overline{MBD}$ changing from 1 to 0 causes the input signal at reset-input R of latch 178 to change from 1 to 0. The signal at the set-input S of latch 178 changes from 0 to 1 due to the change from 0 to 1 of the signal MBD at an input of OR-gate 176. The signal MB at the Q output of latch 178 changes from 0 to 1 due to the change from 0 to 1 at the set-input S of latch 178 and relay 182 will be energized by the output signal of buffer amplifier 181 to close switch 105 to energize motor 23. Upon energization of motor 23 by voltage source 101 through switch 105 and commutator 104, drive gear 26 in Fig. 2 will start rotating in a direction defined by the output signal ML at the output Q of latch 186. The output signal of AND-gate 183 changes from 0 to 1, the output signal of inverter 189, the output signal of AND-gate 188 and the input signal at the reset-input R of latch 186 change from 1 to 0. The output signal of AND-gate 184 due to the 0 to 1 change of the output signal of AND-gate 183 changes to 1 giving a change from a 0 signal to a 1 signal at an input and the output of OR-gate 185, the set-input S and the output Q of latch 186. Relay 194 is energized to connect the motor 23 to voltage source 101 such that upon closure of switch 105 drive gear 26 in Fig. 2 will start rotating counterclockwise. Gear wheel 27 is rotated clockwise by counterclockwise rotating drive gear 26 thus moving magnet 40 out of operative relationship with reed switch 35 and into operative relationship with reed switch 36. It might happen that reed switch 36 is not yet activated by magnet 40 when reed switch 35 already is deactivated. That changes the output signal of OR-gate 160 from 1 to 0 and leads to a 1 signal at the reset-input R of latch 186. To prevent resetting of latch 186 capacitor 187 is chosen such that the input signal at the set-input S of latch 186 has not changed from 1 to 0 yet when reed switch 36 becomes activated by magnet 40. As has been shown hereinbefore no change in the output signals HM, ML and MB occurs when reed switch 36 becomes activated instead of reed switch 35. Motor 23 keeps on being energized to rotate drive gear 26 in Fig. 2 counterclockwise. The same holds for the transition from reed switch 36 to reed switch 37. However, when the transition occurs from reed switch 37 to reed switch 38 both input signals to AND-gate 170 become 1 making the output signal $\overline{MBD}$ 1 which leads to a resetting and 1 to 0 transition at the output Q of latch 178 as described hereinbefore with relation to the simultaneous pressing of push-button 135 and activation of reed switch 35. Resetting of latch 178 means that relay 182 is de-energized, opening switch 105 to stop energization of motor 23 and rotation of drive gear 26. The magnet 40 is now opposite reed switch 38 which means that the initial diaphragm opening of f/16 has been changed to f/45.

In the second example again assume that lens 31 is in its operating position as indicated by pressed push-button 142 and activated reed switch 42. The lines coming from push-button 142 and reed switch 42 in Fig. 6A thus both carry a 1 signal and the lines coming from reed switches 41 and 43 and push-buttons 141 and 143 all carry a 0 signal.

Assume that lens 31 should be changed to lens 32 as indicated by pressed push-button 143 and activated reed switch 43. Further assume that the diaphragm setting of lens 31 is f/16 as indicated by pressed push-button 135 and activated reed switch 35 and that no diaphragm change is needed. That is in the final state the diaphragm setting of lens 32 should also be f/16 as indicated by pressed push-button 135 and activated reed switch 35. In the initial state all signals are exactly the same as described in the previous example leading to signals HM, ML and MB all being 0. Upon pressing push-button 143 the following changes occur. The output signal of AND-gate 147 goes from 1 to 0 making output signal $\overline{MBL}$ of OR-gate 146 0 and output signal MBL of inverter 177 1. Signal $\overline{MBL}$ changing to 0 makes the output signals of AND-gates 180 and 183 change to 0. Signal MBL being 1 makes the output signal of OR-gate 176 1. Thus the reset-input R of latch 178 is supplied with a 0 signal because the input signal $\overline{MBL}$ at a first input of AND-gate 180 is 0 and the set-input S of latch 178 is supplied with a 1 signal making output signal MB 1, which means that switch 105 is closed and motor 23 is energized. The direction of rotation of motor 23 can be determined in the following way: Since both push-buttons 141 and 142 are not pressed the output signals of both AND-gates 149 and 151 are 0. Both input signals of OR-gate 150 being 0, the output signal MLL of OR-gate 150 is 0 and the output signal $\overline{MLL}$ of inverter 191 is 1. Signal $\overline{MLL}$ is one of the input signals of AND-gate 190. The second input signal of AND-gate 190 is the output signal of OR-gate 192 which is 1 since pressing push-button 143 does not instantly deactivate reed switch 42, thus one of the input signals of OR-gate 192 remains 1. The output signal of AND-gate 190, being a first one of the input signals of AND-gate 188 thus is 1. The second input signal of AND-gate 188 is the output signal of inverter 189. The output signal of inverter 189 is 1 because the signal MBD which is one of the input signals of AND-gate 183 is 0 making the input signal of inverter 189 0. Since both input signals of AND-gate 188 are 1 the output signal of AND-gate 188, which is the input signal of reset-input R of latch 186, is 1. That will make the output signal ML 0 unless the input signal at the set-input S of latch 186 should be 1. The input signal at the set-input S of latch 186 is 0 since the signals MLL, $\overline{MBL}$, MLD and MBD, which are input signals to gates 183, 184 and 185 are all 0. The output signal ML thus is 0 and motor 23 is connected to voltage source 101 through commutator 104 and switch 105 to rotate drive gear 26 in Fig. 2 clockwise. As long as magnet 44 does not activate reed switch 43 the output signal $\overline{MBL}$ of OR-gate 146, which is an input signal of AND-gate 184 and the output signal MLL of OR-gate 150 which is an input signal of OR-gate 185 both will remain 0, keeping the input signal at the set-input S of latch 186 0 irrespective of any change occurring in the signals of the reed switches 33—39 and push-buttons 133—139. Also as long as magnet 44 does not activate reed switch 43 the signal MBL which is an input signal to OR-gate 176 remains 1 and thus the output signal MB of latch 178 remains 1 keeping motor 23 energized irrespective of any change occurring in the signals of the reed switches 33—39 and push-buttons 133—139. Due to the clockwise rotation of drive gear 26 gear wheel 27 is rotated counterclockwise bringing magnet 40 in successive operative relationship with reed switches 34 and 33. As explained above no change occurs in the output signals MB and ML of latches 178 and 186, respectively. However, on activating reed switch 33 a first input signal of AND-gate 195 changes from 0 to 1. The other two input signals MBL and $\overline{MLL}$ of AND-gate 195 already were 1. That means that the output signal of AND-gate 195 which is an input signal of OR-gate 196 changes to 1. That effects a 0 to 1 change of the input signal at the set-input S and of the output signal HM at the output Q of latch 198, thus energizing electromagnet 52 through buffer amplifier 200 to withdraw shaft 51 to release lens turret 9. Since the diaphragm mechanisms of the lenses now are in one of their ultimate positions corresponding to a diaphragm setting of f/9 those mechanisms inhibit further rotation of gear wheel 27 with respect to lens turret 9. Drive gear 26 through gear wheel 27 and the diaphragm mechanisms now starts rotating lens turret 9 clockwise. The rotation of lens turret 9 takes magnet 44 out of operative relationship with reed switch 42 as a result of which the output signal of reed switch 42 becomes 0. Since the output signal of reed switch 42 was supplied to first inputs of AND-gates 147 and 151 other input signals of which were already 0, no change occurs in signals $\overline{MBL}$ and MLL. The output signal of OR-gate 192 changes from 1 to 0 and so do the output signals of AND-gates 190 and 188 and the input signal at the reset-input R of latch 186. The 1 to 0 transition at the reset-input R of latch 186 does not affect output signal ML since the input signal at the set-input S of latch 186 was 0 and remains 0, because neither of the signals $\overline{MBL}$ and MLL changes. Motor 23 keeps on being energized and lens turret 9 keeps on rotating until magnet 44 comes into operative relationship with reed switch 43 of which the output signal then changes from 0 to 1. Since the output signal of push-button 143 already was 1 both input signals of AND-gate 148 now are 1 making its output signal 1, thus changing the output signal $\overline{\text{MBL}}$ of OR-gate 146 from 0 to 1. Output signal MBL of inverter 177 changes to 0, making one of the input signals of AND-gate 195 0 and thus its output signal 0. Since the output signal of AND-gate 197 was 0 and has not changed both input signals of OR-gate 196, its output signal and the input signal at the set-input S of latch 198 change to 0. The 1 to 0 change of the input signal of the set-input S of latch 198 does not affect the output signal HM. Output signal HM however is changed from 1 to 0, thus de-energizing electromagnet 52, due to the signal $\overline{\text{MBL}}$ being 1 at the reset-input R of latch 198 as soon as the input signal at the set-input S of latch 198 changes from 1 to 0. De-energization of electromagnet 52 releases shaft 51 to lock lens turret 9 in a position in which lens 32 is in its operating position. Output signal MLL of OR-gate 150 is not affected by the activation of reed switch 43 and remains 0 which means that output signal $\overline{\text{MLL}}$ of inverter 191 remains 1. The 0 to 1 change of reed switch 43 makes one of the input signals of OR-gate 192 1 and thus the output signal of OR-gate 192 changes to 1. Both input signals of AND-gate 190 being 1 its output signal, which is a first input signal of AND-gate 188 changes to 1 making the output signal of AND-gate 188 responsive to changes in its second input signal. It should be realised that at this moment where lens turret 9 is locked because it has reached the desired position as indicated by pressed push-button 143 and activated reed switch 43 and where push-button 135 is pressed and reed switch 33 is activated the situation is fully equivalent to the situation described in the first example where push-button 138 was pressed and reed switch 35 was activated. It is easy to see that now as in the first example output signals ML and MB will be such that drive gear 26 will start rotating counterclockwise until magnet 40 activates reed switch 35 at which moment switch 105 will be opened to de-energize motor 23 to stop rotation of drive gear 26. It will be appreciated that due to reaching the final state as indicated in this example by activation of reed switch 35 the output signal at the Q output of latch 186 changes to 0 thus de-energizing relay 194.

The complete descriptions hereinabove of two arbitrarily chosen examples of the functioning of control circuit 70 are considered to be fully sufficient for a complete understanding by the man of the art of the functioning of control circuit 70 in any other case.

Although the invention has been described in connection with a vertial reprographic camera it will be clear that a lens turret according to the invention can be used with the same advantages on a horizontal reprographic camera.

**Claim**

Optical device comprising a lens turret (9) rotatably mounted on holder (8) and rotatable around an axis, a plurality of lenses (30, 31, 32) mounted on said turret and around said axis, an adjusting gear (27, 28, 29) on at least one of said lenses (30, 31, 32), drive means for rotating said lens turret around said axis with respect to said holder (8) and for rotating said adjusting gear (or gears) with respect to said lens turret, said drive means comprising a shaft (45) rotatable in either direction and coinciding with said rotation axis and carrying a drive gear (26) engaging said adjusting gear (or gears), said device further comprising means (51, 52) providing increased resistance against rotation of said lens turret when one of said lenses is in its operating position, characterised in that at least one of the adjusting gears (27, 28, 29) has a limited range of rotation with respect to said lens turret (9) in at least one direction of rotation, said resistance providing means (51, 52) permitting rotation of said turret (9) when said one adjusting gear is at a limit of said limited range so that then said turret (9) is turnable by said drive gear (26) via said one adjusting gear (27, 28, 29) in said one direction.

**Revendication**

Dispositif optique comprenant une tourelle à objectifs (9) montée rotative sur un support (8) et qui peut tourner autour d'un axe, une pluralité d'objectifs (30, 31, 32) montés sur ladite tourelle et autour dudit axe, un engrenage de réglage (27, 28, 29) prévu sur au moins l'un des objectifs (30, 31, 32), des moyens d'entraînement servant a faire tourner ladite tourelle à objectifs autour dudit axe par rapport audit support (8) et à faire tourner ledit engrenage (ou lesdits engrenages) de réglage par rapport à ladite tourelle à objectifs, lesdits moyens d'entraînement comprenant un arbre (45) qu'on peut faire tourner dans l'un et l'autre sens, qui coïncide avec ledit axe de rotation et qui porte un engrenage d'entraînement (26) en prise avec ledit engrenage (ou lesdits engrenages de réglage, ledit dispositif comprenant en outre des moyens (51, 52) qui opposent une résistance augmentée à la rotation de la tourelle à objectifs lorsque l'un des objectifs est dans sa position de service, caractérisé en ce qu'au moins l'un des engrenages de réglage (27, 28, 29) possède un intervalle de rotation limité par rapport à ladite tourelle à objectifs (9) dans au moins un sens de rotation, lesdits moyens opposant une résistance (51, 52) permettant la rotation de ladite tourelle à objectifs (9) lorsque ledit engrenage de réglage est à une limite dudit intervalle limité de sorte qu'alors, ladite tourelle (9) peut être mise en rotation par ledit engrenage d'entraînement (26) à travers ledit engrenage de réglage (27, 28, 29) dans ledit sens.

## Patentanspruch

Optische Einrichtung mit einem Objektivrevolver (9), der drehbar an einem Halter (8) angeordnet und um eine Achse drehbar ist, mit einer Anzahl von Objecktiven (30, 31, 32), die an dem Objektivrevolver und um die Achse angeordnet sind, mit einem Justierrad (27, 28, 29) an mindestens einem der Objektive (30, 31, 32), einer Antriebseinrichtung zum Drehen des Objektivrevolvers um die Achse relativ zu dem Halter (8) und zum Drehen des Justierrads (oder der Justierräder) relativ zu dem Objektivrevolver, welche Antriebseinrichtung eine Welle (45) aufweist, die in beiden Richtungen drehbar ist und mit der Drehachse zusammenfällt und ein Antriebsrad (26) trägt, das an dem Justierrad (oder an den Justierrädern) angreift, welche Einrichtung ferner eine Einrichtung (51, 52) enthält, die einen erhöhten Widerstand gegen eine Drehung des Objektivrevolvers verursacht, wenn eines der Objecktive sich in seiner Betriebslage befindet, dadurch gekennzeichnet, dass mindestens eines der Justierräder (27, 28, 29) in mindestens einer Drehrichtung einen begrenzten Drehbereich relativ zu dem Objecktivrevolver (9) hat, und dass die den Widerstand verursachende Einrichtung (51, 52) eine Drehung des Objektivrevolvers (9) ermöglicht, wenn das eine Justierrad sich an einer Grenze des begrenzten Bereichs befindet, so dass dann der Objektivrevolver (9) durch das Antriebsrad (26) über das eine Justierrad (27, 28, 29) in der einen Richtung drehbar ist.

FIG. 1

FIG. 2

FIG. 3

FIG. 4

FIG. 5

FIG. 7

6A  6B

FIG. 8

FIG. 6A

0019666

FIG. 6B